# FASCICULE DE BREVET EUROPEEN

(11) **EP 4 444 534 B1**
(45) Date de publication et mention de la délivrance du brevet: **10.09.2025**
(21) Numéro de dépôt: 22843849.5
(22) Date de dépôt: 06.12.2022
(51) Int. Cl.: B29C 70/48, B29C 70/22, F01D 5/28, B29D 99/00, B29C 70/54, B29B 11/16, F01D 9/04, F01D 25/24, B29C 70/24, F01D 5/30

(54) **PROCEDE DE FABRICATION D'UNE PIECE AUBAGEE POUR UNE TURBOMACHINE D'AERONEF**
VERFAHREN ZUR HERSTELLUNG EINES BESCHAUFELTEN BAUTEILS FÜR EIN FLUGZEUGTURBINENTRIEBWERK
METHOD FOR PRODUCING A BLADED COMPONENT FOR AN AIRCRAFT TURBINE ENGINE

(30) Priorité: 09.12.2021 FR 2113202
(43) Date de publication de la demande: 16.10.2024
(73) Titulaire: SAFRAN, 75015 Paris (FR)
(72) Inventeur: LANFANT, Nicolas Pierre, 77550 Moissy-Cramayel (FR); PAUTARD, Sebastien, 77550 Moissy-Cramayel (FR)
(74) Mandataire: Gevers & Orès
(86) Numéro de dépôt international: PCT/FR2022/052257
(87) Numéro de publication internationale: WO 2023/105155

(56) Documents cités:
- US-B2- 10 532 521
- US-B2- 11 141 938

## Description

### Domaine technique de l'invention

La présente invention concerne un procédé de fabrication d'une pièce aubagée pour une turbomachine d'aéronef.

### Arrière-plan technique

L'arrière-plan technique comprend notamment les documents US-B2-10,532,521 et US-B2-11,141,938.

Une pièce aubagée de turbomachine d'aéronef est par exemple une aube de rotor ou une aube de stator. Une telle pièce comporte une pale qui a un profil aérodynamique et une forme générale allongée le long d'un axe X, appelé couramment axe « d'empilement » dans la technique considérée. La pièce peut comporter une plateforme à au moins une des extrémités longitudinales de la pale le long de l'axe X précité. Cette plateforme s'étend dans une direction transversale par rapport à l'axe X, c'est-à-dire dans un plan perpendiculaire à cet axe.

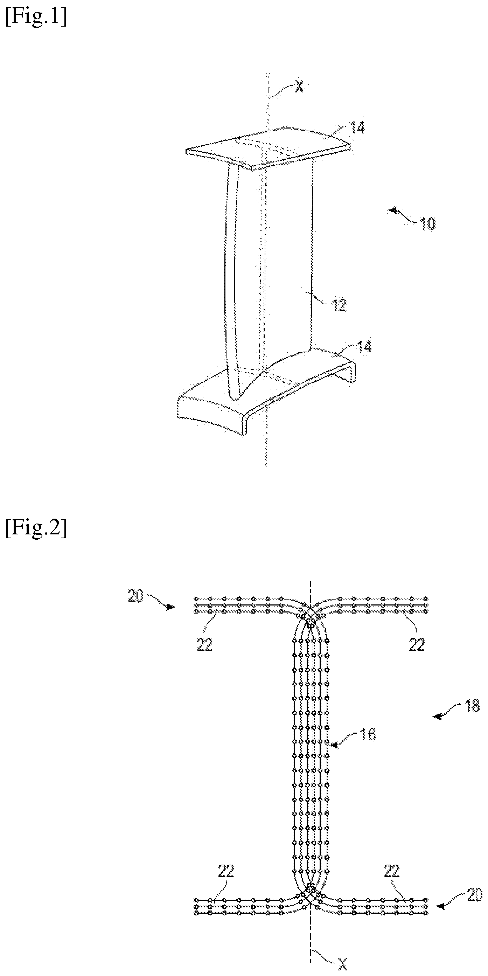

La figure 1 représente par exemple un redresseur de flux d'air qui est une pièce aubagée 10 dont la pale 12 est reliée à une plateforme 14 à chacune de ses extrémités longitudinales.

Il est connu et avantageux de réaliser une pièce aubagée en matériau composite, à partir d'une préforme fibreuse noyée dans une matrice polymérique qui est obtenue par polymérisation d'une résine thermodurcissable ou consolidation d'une résine thermoplastique.

La préforme peut dans ce cas être réalisée par tissage en trois dimensions de fibres formant des fils de trame et des fils de chaine, ou bien par empilement de nappes de fibres. Ces fibres sont imprégnées avec la résine ou cette résine est injectée dans la préforme après sa mise en forme, par exemple par la technologie RTM qui est l'acronyme de l'anglais *Resin Transfer Molding* et qui est une technique bien connue de réalisation d'une aube par injection-moulage.

Le document WO-A2-2013/088040 décrit la réalisation de pièces aubagées à partir de préforme tissée en trois dimensions.

Dans le cas de la réalisation d'une pièce aubagée équipée d'une ou de plateforme(s), il est décrit dans ce document que des portions de la préforme peuvent être situées dans la plateforme en réalisant au moins une déliaison de la préforme.

Dans la présente demande, on entend par déliaison le fait séparer une structure unitaire en deux sous structures indépendantes. Dans l'exemple illustré à la figure 2, la partie centrale 16 de la préforme 18 reste unitaire et les parties d'extrémité 20 de la préforme 18 sont chacune séparées en deux portions 22 par une déliaison de la préforme 18. Chacune des portions 22 peut comprendre plusieurs couches de fibres. Les portions 22 sont ainsi désolidarisées l'une de l'autre et sont pliées pour les orienter dans une direction perpendiculaire à l'axe X de la partie centrale 16. Les deux portions 22 situées à une extrémité longitudinale de la préforme 18 sont destinées à former une des plateformes 14 ou à être intégrées dans cette plateforme, et les deux portions 22 situées à l'extrémité longitudinale opposée de la préforme 18 sont destinées à former l'autre plateforme 14 ou à être intégrées dans cette autre plateforme.

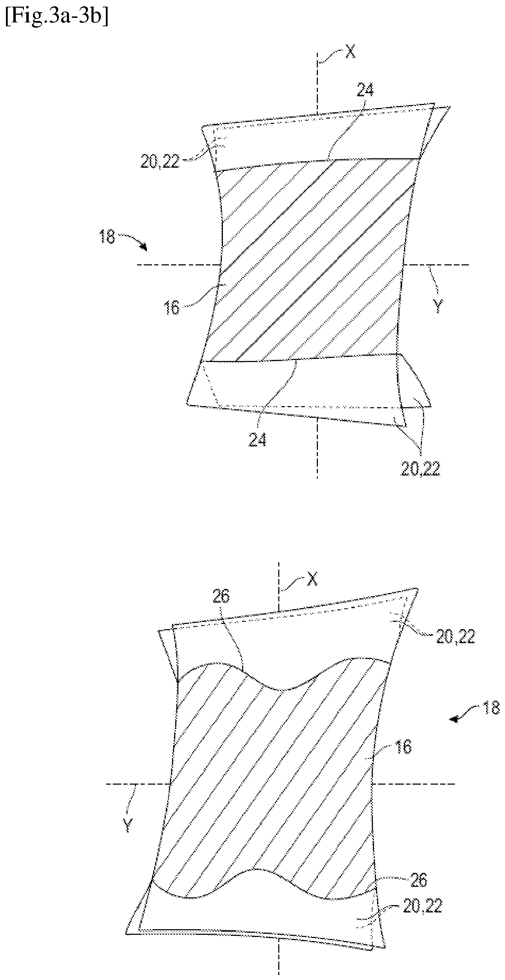

La figure 3a illustre une déliaison telle qu'elle est réalisée dans la technique actuelle. Au niveau de chacune des parties d'extrémité 20 de la préforme 18, la déliaison est réalisée de sorte que les portions 22 soient reliées ensemble, à la jonction entre les première et seconde parties 20, par une ligne de liaison 24 qui est rectiligne et peut s'étendre perpendiculairement à l'axe X.

Les inventeurs ont constaté que cette ligne 24 droite ou rectiligne crée un axe privilégié de rotation ou de déformation de la pièce aubagée 10, qui a donc tendance à se déformer autour de cette ligne lorsqu'elle est soumise aux contraintes de fonctionnement (pressions aérodynamique, efforts de la structure du moteur, etc.). Cette déformation n'est pas souhaitée et peut altérer la durée de vie de la pièce aubagée 10 et les performances de la turbomachine.

La présente invention propose une solution simple, efficace et économique à ce problème.

### Résumé de l'invention

La présente invention concerne un procédé de fabrication d'une pièce aubagée pour une turbomachine d'aéronef, conformément à la revendication 1, cette pièce aubagée comportant une pale présentant un axe d'empilement et dont au moins une extrémité longitudinale est reliée à une plateforme transversale, le procédé comprenant les étapes de :
a) réalisation d'une préforme en fibres, cette préforme ayant une forme générale allongée le long dudit axe et plane, cette préforme comportant une première partie destinée à former la pale et au moins une seconde partie qui est située à une extrémité longitudinale de la préforme et qui est destinée à former une plateforme, cette seconde partie de la préforme comportant une déliaison définissant deux portions superposées séparées par une surface de déliaison sensiblement parallèle à l'axe X,
b) plier les portions respectivement sur deux côtés opposés de la première partie, et
c) rigidifier la préforme,
caractérisé en ce que, à l'étape a), la déliaison est telle que les portions soit reliées ensemble, à la jonction entre les première et seconde parties, par une ligne de liaison qui a une forme générale ondulée.

La forme ondulée, par exemple sinusoïdale, de la ligne de liaison permet de supprimer l'axe de rotation ou de déformation évoqué plus haut et rigidifie ainsi la liaison entre la plateforme et la pale. La pièce aubagée a ainsi une tenue mécanique et une durée de vie améliorées.

Le procédé selon l'invention peut comprendre une ou plusieurs des caractéristiques ou étapes suivantes, prises seules ou en combinaison les unes avec les autres :
- la ligne de liaison comprend au moins un ou trois ventres d'ondulation ;
- l'étape a) est réalisée par tissage en trois dimensions de fibres formant des fils de trame et des fils de chaîne, les fils de chaine s'étendant le long de l'axe X et les fils de trame s'étendant perpendiculairement à l'axe, les fils de trame s'étendant en continu dans la première partie et s'étendant de manière discontinue dans la seconde partie en étant interrompus au niveau de ladite surface de déliaison ;
- l'étape c) est réalisée par injection de résine dans la préforme, et polymérisation de cette résine ;
- l'étape a) est réalisée par empilement de nappes de fibres, les nappes de fibres s'étendant le long de l'axe X ;
- l'étape c) est réalisée par thermocompression de la préforme dont les fibres sont préalablement imprégnées avec une résine ;
- la ligne de liaison a une amplitude comprise entre 2 et 20mm, et de préférence entre 5 et 10mm ;
- il comprend, entre les étapes b) et c), une étape de formage de la préforme ;
- le procédé comprend une étape d) suivante de formation de la plateforme, soit en rapportant et fixant des éléments sur les portions, soit en surmoulant ces portions.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une pièce aubagée de turbomachine d'aéronef, qui est ici un redresseur de flux d'air ;
[Fig.2] la figure 2 est une vue très schématique d'une préforme dont des parties d'extrémité ont subi une déliaison ;
[Fig.3a-3b] les figures 3a et 3b montrent des préformes avec des déliaisons, selon la technique antérieure à la figure 3a et selon l'invention à la figure 3b ;
[Fig.4] la figure 4 est une vue schématique partielle d'une préforme avec plusieurs variantes de réalisation d'une déliaison selon l'invention ;
[Fig.5a-5b] les figures 5a et 5b sont des vues schématiques en perspective d'une préforme qui a subi une déliaison conformément à l'invention, ainsi qu'une consolidation ;
[Fig.5c-5d] les figures 5c et 5d sont des vues en coupe selon les lignes A-A et B-B de la figure 5a ;
[Fig.6a] la figure 6a est une vue schématique en perspective d'une pièce aubagée conformément à l'invention, avec un surmoulage ;
[Fig.6b] la figure 6b est une vue en coupe selon les lignes A-A de la figure 6a ;
[Fig.7] la figure 7 est une vue schématique en perspective d'une préforme en cours de déliaison par un outil tel qu'un jeu de lames ; et
[Fig.8] la figure 8 est une autre vue schématique en coupe de la préforme et de l'outil de la figure 7.

### Description détaillée de l'invention

Les figures 1 et 2 peuvent être considérées comme illustrant une pièce aubagée 10 au sens de l'invention.

Cette pièce aubagée 10 comporte une pale 12 présentant un axe d'empilement X et dont au moins une extrémité longitudinale est reliée à une plateforme 14 transversale.

L'invention concerne un procédé de fabrication de cette pièce aubagée, qui comprend les étapes de :
a) réalisation d'une préforme 18 en fibres, cette préforme 18 ayant une forme générale allongée et plane, cette préforme 18 comportant une première partie 16 destinée à former la pale 12 et au moins une seconde partie 20 qui est située à une extrémité longitudinale de la préforme 18 et qui est destinée à former une plateforme 14, cette
   seconde partie de la préforme 18 comportant une déliaison définissant deux portions 22 superposées séparées par une surface de déliaison sensiblement parallèle à l'axe X, cette déliaison étant réalisée de sorte que les portions 22 soient reliées ensemble, à la jonction entre les première et seconde parties, par une ligne de liaison 26 qui a une forme générale ondulée (cf. figure 3b),
b) plier les portions 22 respectivement sur deux côtés opposés de la première partie 16 (cf. figure 2), et
c) rigidifier la préforme.

On définit par Y un axe perpendiculaire à X. La préforme 18 s'étend dans le plan XY.

Une ligne de liaison 26 ondulée signifie que, dans le plan XY, la valeur de X varie le long de l'axe Y.

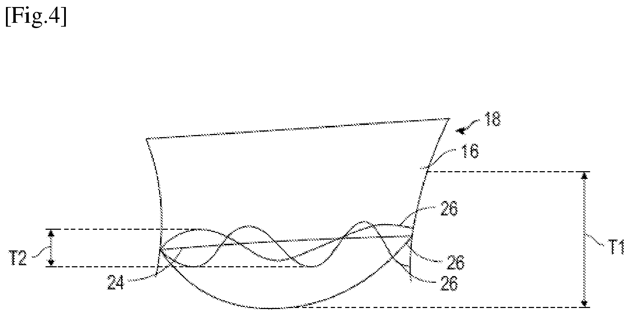

La figure 4 montre plusieurs variantes de réalisation de la ligne de liaison 26 ondulée. On constate que la ligne 26 peut comprendre plusieurs ventres d'ondulation, par exemple entre 2 et 3. Cette figure montre également que l'amplitude T1, T2 des ondulations peut varier et est par exemple comprise entre 2 et 20mm, et de préférence entre 5 et 10mm. La pièce aubagée a par exemple une longueur le long de l'axe X qui est comprise entre 10 et 500mm, et de préférence entre 50 et 200mm.

A l'étape a), la préforme peut être fabriquée par tissage en trois dimensions de fibres, notamment en carbone, formant des fils de trame et des fils de chaîne, par exemple au moyen d'un métier du type Jacquard. Les fils de chaine s'étendent le long de l'axe X et les fils de trame s'étendent perpendiculairement à l'axe X, comme illustré à la figure 2. L'étape b) est alors réalisée en coupant les fils de trame au niveau de la surface de déliaison, au moyen d'un outil de coupe 28.

Dans cette configuration, il y a une partie où la préforme est tissée dans toute l'épaisseur et une partie ou la définition du tissage fait qu'aucun fil de trame ne traverse le plan de la surface de déliaison. Les portions de chaque côté de ce plan ne sont donc pas liées entre elles.

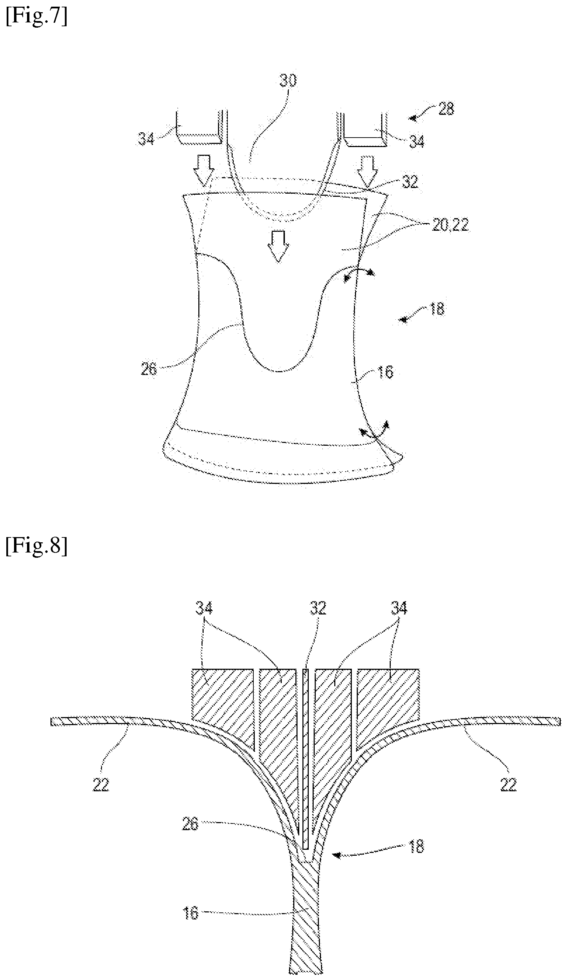

Les figures 7 et 8 illustrent un exemple d'outil permettant d'ouvrir la déliaison. L'outil comprend plusieurs lames 30, 34 superposées et capable de coulisser les unes sur les autres.

Le principe des lames 30, 34 est d'aider à former la déliaison en dépliant les deux portions 22 de la préforme progressivement de façon à créer des rayons souhaités de liaison de la pale à la plateforme, sans ondulation de la préforme. En pratique, l'on commence par insérer une lame 30 entre les deux portions non liées de la préforme. Puis on insère de chaque côté des lames 34 additionnelles ayant des bords 32 à la forme du rayon souhaité, en s'assurant de ne pas créer de pli de préforme, par exemple en dépliant la préforme manuellement et en appliquant une légère traction dans le sens du dépliage. Il peut y avoir plusieurs « lames » dans ce cas et on commence de préférence toujours par le centre vers l'extérieur du rayon pour éviter les plis.

L'étape c) de rigidification de la préforme 18 est de préférence réalisée par injection de résine dans la préforme, préalablement positionné dans un moule.

La technologie employée ici peut être du type RTM, ou d'un autre type (connu de l'homme du métier) choisi parmi : VARTM, CRTM, polyflex, etc.

La polymérisation de la résine permet un durcissement et une rigidification complète de la préforme.

En variante, l'étape a) peut être réalisée par empilement de nappes de fibres. Les nappes de fibres s'étendent le long de l'axe X et sont empilées le long d'un axe perpendiculaire au plan XY. La déliaison est réalisée lors de l'empilement, en évitant une solidarisation des nappes de fibres constituant l'une des portions 22, avec les nappes de fibres constituant l'autre portion 22. Les fibres utilisées pour la réalisation de la préforme peuvent être des fibres continues ou discontinues, imprégnées ou non imprégnées. Dans le cas de l'utilisation de nappes de fibres, les nappes peuvent être formées par des fibres longues discontinues préimprégnées, par des coupons de fibres unidirectionnelles et disposés aléatoirement, etc.

Dans ce cas, l'étape c) de rigidification de la préforme 18 est de préférence réalisée par thermocompression de la préforme 18. Cette étape peut comprendre une sous-étape préalable d'humidification de la préforme. Cette étape d'humidification peut permettre de ramollir une substance d'enrobage des fibres qui est destinée à faciliter leur tissage. La thermocompression permet alors de mélanger les substances des fibres entre elles et ainsi lier les fibres de la préforme, ce qui participe à sa rigidification après refroidissement. La résine peut être une résine thermodurcissable ou thermoplastique (époxy - par exemple PR520, bismaldéide, etc.). Les fibres de la préforme 18 sont de préférence en carbone. L'injection de la résine, voire la thermocompression, sont réalisées dans un moule et de préférence dans deux moules distincts. Le ou chaque moule comprend une empreinte en creux de réception de la préforme 18.

Entre les étapes b) et c) précitées, le procédé selon l'invention peut comprendre une étape de formage de la préforme. Cette étape est optionnelle et consiste à appliquer une pression sur la préforme pour la mettre en forme. Cette opération peut s'accompagner d'une chauffe, elle peut aussi être réalisée sur une préforme mouillée à l'eau, elle peut être réalisée en tirant le vide pour retirer l'humidité. Cette étape permet de stabiliser la préforme avant de la basculer dans le moule d'injection ou de thermocompression.

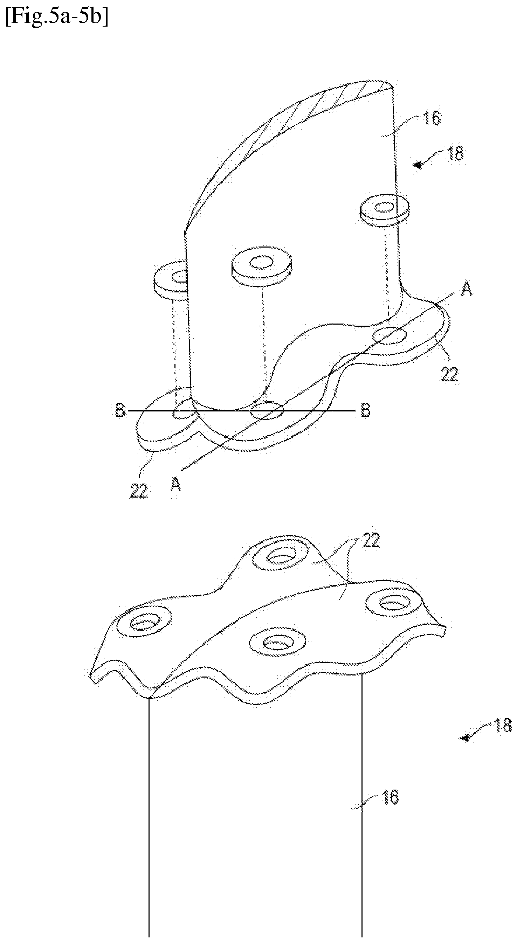

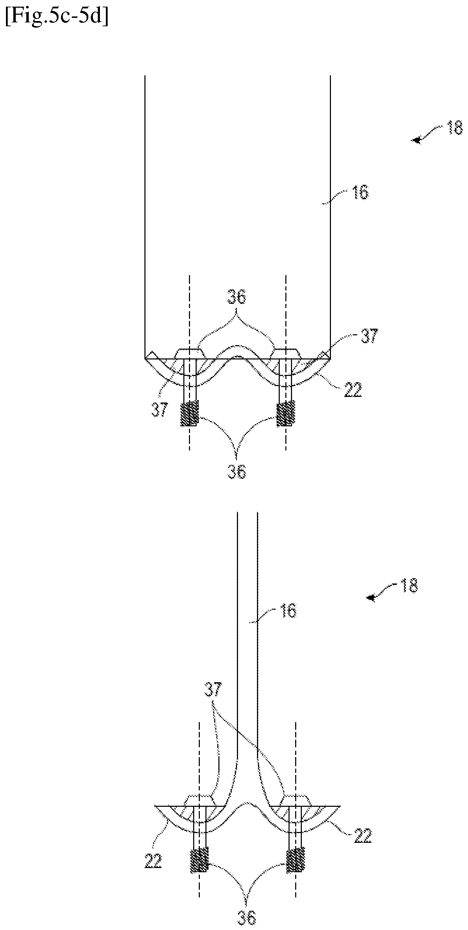

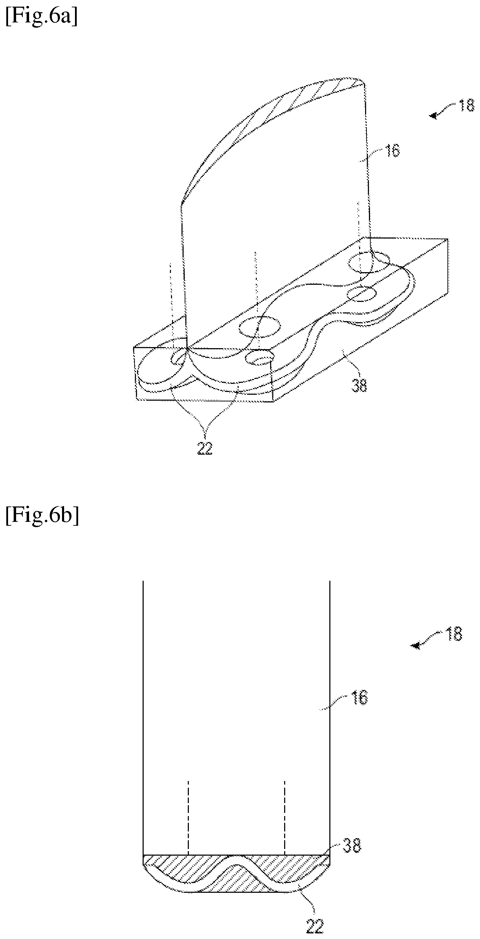

Les figures 5a à 5d permettent de visualiser la préforme 18 rigidifiée. Du fait de la forme ondulée de la ligne de liaison 26, les portions 22 situées de part et d'autre de la pale 16 ont-elles-mêmes une forme ondulée en trois dimensions. Chacune de ces portions 22 peut être percée pour recevoir une vis 36 de fixation de la pièce aubagée. Chacune de ces portions 22 peut également recevoir au moins une pièce 37 rapportée pour former la plateforme 12, ou bien peut recevoir un surmoulage 38 pour former cette plateforme, comme cela est représenté aux figures 6a et 6b.

Le procédé selon l'invention permet d'obtenir une plus grande raideur et un plus grand moment d'inertie de la liaison de la pale à la plateforme de la pièce aubagée. La pièce aubagée est soumise en fonctionnement à des efforts aérodynamiques (pression de l'air sur la pale) et des efforts structuraux (mouvements relatifs avec des carters). Ces efforts transitent des plateformes vers la pale ou inversement. Le raidissement de la jonction entre la pale et la ou les plateformes permet de limiter les risques de déformation de la pièce aubagée et optimise ainsi les performances du moteur.

## Revendications

1. Procédé de fabrication d'une pièce aubagée (10) pour une turbomachine d'aéronef, cette pièce aubagée (10) comportant une pale (12) présentant un axe d'empilement (X) et dont au moins une extrémité longitudinale est reliée à une plateforme (14) transversale, le procédé comprenant les étapes de :
a) réalisation d'une préforme (18) en fibres, cette préforme (18) ayant une forme générale allongée le long dudit axe (X) et plane, cette préforme (18) comportant une première partie (16) destinée à former la pale (12) et au moins une seconde partie (20) qui est située à une extrémité longitudinale de la préforme (18) et qui est destinée à former une plateforme (14), cette seconde partie (20) de la préforme (18) comportant une déliaison définissant deux portions (22) superposées séparées par une surface de déliaison sensiblement parallèle à l'axe (X),
b) plier les portions (22) respectivement sur deux côtés opposés de la première partie (16), et
c) rigidifier la préforme (18),
**caractérisé en ce que**, à l'étape a), la déliaison est telle que les portions (22) sont reliées ensemble, à la jonction entre les première et seconde parties (16, 20), par une ligne de liaison (26) qui a une forme générale ondulée.

2. Procédé selon la revendication 1, dans lequel la ligne de liaison (26) comprend au moins un ou trois ventres d'ondulation.

3. Procédé selon la revendication 1 ou 2, dans lequel l'étape a) est réalisée par tissage en trois dimensions de fibres formant des fils de trame et des fils de chaîne, les fils de chaine s'étendant le long de l'axe (X) et les fils de trame s'étendant perpendiculairement à l'axe (X), les fils de trame s'étendant en continu dans la première partie (16) et s'étendant de manière discontinue dans la seconde partie (20) en étant interrompus au niveau de ladite surface de déliaison.

4. Procédé selon la revendication précédente, dans lequel l'étape c) est réalisée par injection de résine dans la préforme, et polymérisation de cette résine.

5. Procédé selon la revendication 1 ou 2, dans lequel l'étape a) est réalisée par empilement de nappes de fibres, les nappes de fibres s'étendant le long de l'axe (X).

6. Procédé selon la revendication précédente, dans lequel l'étape c) est réalisée par thermocompression de la préforme (18) dont les fibres sont préalablement imprégnées avec une résine.

7. Procédé selon l'une des revendications précédentes, dans lequel la ligne de liaison (26) a une amplitude (T1, T2) comprise entre 2 et 20mm, et de préférence entre 5 et 10mm.

8. Procédé selon l'une des revendications précédentes, dans lequel il comprend, entre les étapes b) et c), une étape de formage de la préforme.

9. Procédé selon l'une des revendications précédentes, dans lequel il comprend une étape d) suivante de formation de la plateforme (14), soit en rapportant et fixant des éléments sur les portions (22), soit en surmoulant ces portions.

## Patentansprüche

1. Verfahren zur Herstellung eines beschaufelten Bauteils (10) für ein Flugzeugturbotriebwerk, wobei dieses beschaufelte Bauteil (10) ein Blatt (12) umfasst, das eine Stapelachse (X) aufweist und bei dem mindestens ein Längsende mit einer querliegenden Plattform (14) verbunden ist, wobei das Verfahren die folgenden Schritte umfasst:
a) Fertigung einer Vorform (18) aus Fasern, wobei diese Vorform (18) eine allgemeine Form aufweist, die entlang der Achse (X) langgestreckt und eben ist, wobei diese Vorform (18) ein erstes Teil (16), das dazu vorgesehen ist, das Blatt (12) zu bilden, und mindestens ein zweites Teil (20) umfasst, das sich an einem Längsende der Vorform (18) befindet und das dazu vorgesehen ist, eine Plattform (14) zu bilden, wobei dieses zweite Teil (20) der Vorform (18) eine Abtrennung umfasst, die zwei überlagerte Abschnitte (22) definiert, die durch eine im Wesentlichen zur Achse (X) parallelen Abtrennungsfläche getrennt sind,
b) Biegen der Abschnitte (22) jeweils auf zwei gegenüberliegenden Seiten des ersten Teils (16), und
c) Versteifen der Vorform (18),
**dadurch gekennzeichnet, dass** die Abtrennung im Schritt a) derart ist, dass die Abschnitte (22) an der Verbindungsstelle zwischen dem ersten und dem zweiten Teil (16, 20) über eine Verbindungslinie (26) miteinander verbunden sind, die eine allgemeine wellige Form aufweist.

2. Verfahren nach Anspruch 1, wobei die Verbindungslinie (26) mindestens eine oder drei Wellenbäuche umfasst.

3. Verfahren nach Anspruch 1 oder 2, wobei der Schritt a) durch dreidimensionales Weben von Fasern durchgeführt wird, die Schussfäden und Kettenfäden bilden, wobei die Kettenfäden sich entlang der Achse (X) erstrecken und die Schussfäden sich senkrecht zur Achse (X) erstrecken, wobei sich die Schussfäden kontinuierlich im ersten Teil (16) erstrecken und sich diskontinuierlich im zweiten Teil (20 erstrecken, wobei sie auf Höhe der Abtrennungsfläche unterbrochen sind.

4. Verfahren nach dem vorstehenden Anspruch, wobei der Schritt c) durch Einspritzen von Harz in die Vorform und Polymerisierung dieses Harzes durchgeführt wird.

5. Verfahren nach Anspruch 1 oder 2, wobei der Schritt a) durch Stapeln von Faserlagen durchgeführt wird, wobei die Faserlagen sich entlang der Achse (X) erstrecken.

6. Verfahren nach dem vorstehenden Anspruch, wobei der Schritt c) durch Thermokompression der Vorform (18), dessen Fasern vorab mit einem Harz imprägniert wurden, durchgeführt wird.

7. Verfahren nach einem der vorstehenden Ansprüche, wobei die Verbindungslinie (26) eine Amplitude (T1, T2) zwischen 2 und 20 mm und vorzugsweise zwischen 5 und 10 mm aufweist.

8. Verfahren nach einem der vorstehenden Ansprüche, wobei es zwischen den Schritten b) und c) einen Schritt der Bildung der Vorform umfasst.

9. Verfahren nach einem der vorstehenden Ansprüche, wobei es einen folgenden Schritt d) der Bildung der Plattform (14) entweder durch Anstücken und Befestigen von Elementen an den Abschnitten (22) oder durch Übergießen dieser Abschnitte umfasst.

## Claims

1. A method for producing a bladed component (10) for an aircraft turbine engine, this bladed component (10) comprising a blade (12) having a stacking axis (X) and having at least one longitudinal end connected to a transverse platform (14), the method comprising the steps of :
a) producing a fibrous preform (18), this preform (18) having a generally elongate shape along said axis (X) and being flat, this preform (18) comprising a first part (16) that is intended to form the blade (12) and at least one second part (20) which is situated at a longitudinal end of the preform (18) and which is intended to form a platform (14), this second part (20) of the preform (18) comprising a disconnect defining two superimposed portions (22) separated by a disconnect surface substantially parallel to the axis (X),
b) folding the portions (22) respectively on two opposite sides of the first part (16), and
c) stiffening the preform (18),
**characterized in that**, in step a), the disconnect is such that the portions (22) are connected together, at the junction between the first and second parts (16, 20), by a connecting line (26) which has a generally undulating shape.

2. The method according to claim 1, wherein the connecting line (26) comprises at least one or three undulation antinodes.

3. The method according to claim 1 or 2, wherein step a) is carried-out by three-dimensional weaving of fibers forming weft threads and warp threads, the warp threads extending along the axis (X) and the weft threads extending perpendicularly to the axis (X), the weft threads extending continuously in the first part (16) and extending discontinuously in the second part (20) and being interrupted at said disconnect surface.

4. The method according to the preceding claim, wherein step c) is carried out by injecting resin into the preform and polymerizing this resin.

5. The method according to claim 1 or 2, wherein step a) is carried out by stacking fiber mats, the fiber mats extending along the axis (X).

6. The method according to the preceding claim, wherein step c) is carried out by thermocompression of the preform (18), the fibers of which are previously impregnated with a resin.

7. The method according to one of the preceding claims, wherein the connecting line (26) has an amplitude (T1, T2) of between 2 and 20 mm, and preferably between 5 and 10 mm.

8. The method according to one of the preceding claims, wherein it comprises, between steps b) and c), a step of forming the preform.

9. The method according to one of the preceding claims, wherein it comprises a subsequent step d) of forming the platform (14), either by mounting and attaching elements to the portions (22), or by overmolding these portions.
